# EUROPÄISCHE PATENTSCHRIFT

(11) **EP 2 001 738 B1**
(45) Veröffentlichungstag und Bekanntmachung des Hinweises auf die Patenterteilung: **20.04.2011**
(21) Anmeldenummer: 06840955.6
(22) Anmeldetag: 06.12.2006
(51) Int. Cl.: B64B 1/06, B64B 1/08, B64B 1/22, B64B 1/24

(54) **FLUGTRANSPORTER**
AERIAL TRANSPORTER
MOYEN DE TRANSPORT VOLANT

(30) Priorität: 06.12.2005 DE 102005058352
(43) Veröffentlichungstag der Anmeldung: 17.12.2008
(73) Patentinhaber: CL CargoLifter GmbH & Co. KG a .A., 14057 Berlin (DE)
(72) Erfinder: ZULKOWSKI, Rolf, OT Zeesen (DE); HENK, Jürgen, OT Zeesen (DE); VON GABLENZ, Carl, 14057 Berlin (DE); VON KESSEL, Christoph, 14532 Kleinmachnow (DE)
(74) Vertreter: Gulde Hengelhaupt Ziebig & Schneider
(86) Internationale Anmeldenummer: PCT/EP2006/011702
(87) Internationale Veröffentlichungsnummer: WO 2007/065649

(56) Entgegenhaltungen:
- DE-A1- 10 007 293
- GB-A- 2 196 922
- GB-A- 2 264 092
- US-A- 4 259 776

## Beschreibung

Die Erfindung betrifft einen Flugtransporter mit starren Zellenstrukturen, die mit leichten Materialien als Hülle bespannt sind, ähnlich eines für sich bekannten "Zeppelin", zusammengesetzt aus Modulen.

Die Druckschrift GB 2264 092 A offenbart Luftschiffe mit Antrieb und Gondeln. Die Beschreibung im Dokuments gibt einen kurzen Überblick über die diversen Systeme starrer, halbstarrer und nicht starrer Luftschiffe, die steuerbar sind, Antriebe haben und bei denen unterhalb des Gasraums eine abgehängte Gondel angeordnet ist.
Umfassende theoretische Beschreibungen zum Stand der Technik geben Bock, Knauer in ihrem Buch "Leichter als Luft, Transport- und Trägersysteme, Ballone, Luftschiffe, Plattformen", Verlag Frankenschwelle, Hildburghausen, 2003, DE, an.
Ein besonderes Problem, welches durch die Luftschiffe gelöst werden kann, ist ein punktgenaues Absetzen einer Last. Dazu sind in der Patentliteratur eine Reihe von Vorschlägen erschienen, so in den deutschen Offenlegungsschriften DE 100 58 072 A1, DE 101 48 589 A1, DE 196 25 297 A1 mit der Darstellung verschiedener Verankerungen am Boden während eines Lastaustausches zwischen Boden und Luftschiff. In letzter Zeit ist neben dem Lufttransport von insbesondere sperrigen und schweren Lasten auch die Idee publiziert worden, Ballone als Montagekrane zu verwenden, wobei diese Ballone nach Art eines Fesselballons an mindestens drei Punkten auf dem Boden befestigt oder angeschlagen sind, um den Ballon bzw. die daran hängende und zu transportierende Last punktgenau zu verschieben. Als Beispiel für derartige Veröffentlichungen seien die deutschen Offenlegungsschriften DE 199 11 617 A1 und DE 10210 540 A1 genannt.
Der bisherige Standard war eine Bauform, wie sie beispielsweise Graf Zeppelin vorgegeben hatte mit seinem "lenkbaren Luftfahrzeug", DE-PS 985 80, aber auch danach folgende Erfinder, z.B. gemäß den deutschen Patentschriften DE 235 587, DE 251 657, verwendeten ein Metall- oder Holzgerippe mit sich wiederholendem Muster, das den äußeren Rahmen für das Luftfahrzeug bildete. Dieser Rahmen wurde mit einer gasdichter Außenhaut umspannt wurde bzw. mit gasdichten Trägergas-Ballonnets gefüllt.
Es ist schon vorgeschlagen worten, mit der DE-PS 231 266 ein Luftschiff aus unmittelbar hintereinander angeordneten gleichartigen Einzettragkörpern zusammenzusetzen, wobei diese Einzeltragkörper für ein zerlegbares Luftschiff aus unter Druck stehenden Schlauchreifen bestehen sollten.
Es ist auch schon vorgeschlagen worden, standardisierte Bauelemente in modularer Art zu verwenden, beispielsweise mit der deutschen Schrift DE 42 18 239 C2, bei der ein Starrluftschiff aus einem Gitterrumpf verwendet wird und im Kielbereich für den Güter- und Personentransport einen Nutzlastraum anzuordnen und an dem Gitterrumpf aufzuhängen; In den Raum können einzelne identische Nutzlastpaletten eingeschoben werden.

In einer theoretischen Arbeit ist in der Druckschrift DE 100 07 293 A1 vorgeschlagen worden, ein Luftschiff aus Modulen zusammenzusetzen, wobei entsprechend viele Auftriebsbehälter in der Länge, in der Breite und in der Höhe neben- und aneinandergeordnet und verbunden werden, für verschiedene dort gelistete Anwendungszwecke. Wie ein derartiges Luftschiff steuerfähig gehalten werden soll oder wie die einzelnen Module ausgestaltet sind, ist nicht offenbart. Ebenso wenig ist dargestellt, wie man mit dem Problem der Lastwechsel beim Be- und Entladen fertig werden soll.

Von daher liegt der Erfindung das Problem zugrunde, ein in Serien fertigbares Starr-Luftschiff mit der Einsatzmöglichkeit als Transporter und Montagekran bei guten Start- und Landemöglichkeiten vorzuschlagen.

Das Problem wird erfindungsgemäß gelöst durch die Merkmale der Ansprüche 1, 8 und 9. Weiterbildungen der Erfindung sind in den abhängigen Ansprüchen beschrieben.

Der Flugtransporter baut auf bekannten Verfahren der Herstellung auf und übernimmt Erfahrungen aus dem Zeppelin-Stan-Luftschiffbau zu Anfang des 20. Jahrhunderts sowie dem CargoLifter-Batton-Projekten gegen Ende des 20.

Jahrhunderts. Dabei werden die hergebrachten Techniken mit den innovativen Technologien und Werkstoffen realisiert, sofern sie die Chance für eine schnelle Zulassung in der Luftfahrt bieten. Für mittel- und längerfristig zuzulassende Technologien und Werkstoffe kann er als Versuchsträger dienen.

Anhand einer Zeichnung und der folgenden Beschreibung soll die Erfindung in ihren Details, Perspektiven und Zwecken näher erläutert werden. Es zeigen
- Fig. 1: eine Seitenansicht der Module in Teilfiguren a) - c) sowie in Draufsicht d) gemäß Fig. 1b);
- Fig. 2: eine Vorderansicht von Modulen in Teilfiguren a) - c) sowie perspektivische Draufsicht auf ein Modul gemäß Fig 1c);
- Fig. 3: eine perspektivische Vorderansicht des kompletten Transporters analog Fig. 2;
- Fig. 4: eine Flugansicht einer weiteren Ausführungsform des Transporters;
- Fig. 5: eine Ansicht des Transporters gemäß Fig. 4 beim Landeanflug.

Im Gegensatz zu den bisher zaghaften Entwicklungen (Zeppelin) wird der Einsatz von Wasserstoff als Traggas und gegebenenfalls als Treibstoff angestrebt, wobei zur Überbrückung bis zur luftfahrtrechtlichen Zulassung auch Helium (He) Verwendung finden kann.
DerFlugtransporter ist in erster Näherung ein starrer, angetriebener Ballon für den Kranflug und für den Frachttransport. Es kann in Modulbauweise für diverse Lasten oder Aufgaben realisiert und mit Wasserstoff, sowohl als Traggas als auch für den Antrieb betrieben werden. Der Flug kann bemannt oder unbemannt, automatisch und funkferngesteuert erfolgen. Die Kranfunktion kann im gefesselten Zustand des Auftriebkörpers realisiert und dabei die Kransteuerung direkt und funkferngesteuert vom Boden aus betrieben werden. Der Flugtransporter ist für eine Verwendung als Lastentransporter im Kurz- bis Mittelstreckenbereich bis etwa 1000 km oder mehr vorgesehen. Dies erspart' beim Umsetzen von Lasten, Aggregaten usw., Behinderungen auf den Straßen bzw. aufwändige Demontagen und Montagen von Leiteinrichtungen und Straßenmöbeln. Falls keine entsprechende landseitige Infrastruktur vorhanden ist, gibt es kaum Alternativen.

Vorteile der Transporttechnologie:
- Entlastung der Transporte auf dem Landwege,
- Größere und sperrige Güter können problemloser transportiert werden, indem Demontagen der Transportgüter oder der Verkehrsanlagen entfallen,
- Realisierung von Kranfunktionen schwerer Güter im gefesselten Zustand,
- Transporte in unwegsame Gebiete sind kostengünstig zu realisieren, Einsparungen im Ausbau der oftmals nicht mehr erweiterbaren bzw. zu aufwendigen Verkehrsinfrastrukturen,
- Gestaltung eines kostengünstigeren Lufttransportes gegenüber Flugzeugen und Schwerlasthubschraubern,
- Lasten oder Anlagen (z.B. für Beobachtung) können längere Zeit in der Standschwebe über einem Ort gehalten werden,
- Verknüpfung mit anderen Verkehrsträgern (z.B. Seeverkehr) ist wirtschaftlich machbar,
- die Steigerungsraten des Transportbedarfes in der Zukunft sind aufzufangen,
- der Transport ist schadstoffarm, d.h. umweltverträglich zu realisieren,
- Alleinstellungsmerkmale der Technologie bieten Chancen für eine neue Industrie und nachhaltige qualifizierte Arbeitsplätze,

Des Weiteren wird wegen verbesserter Effektivität auf den ferngesteuerten Betrieb ohne Besatzung orientiert.

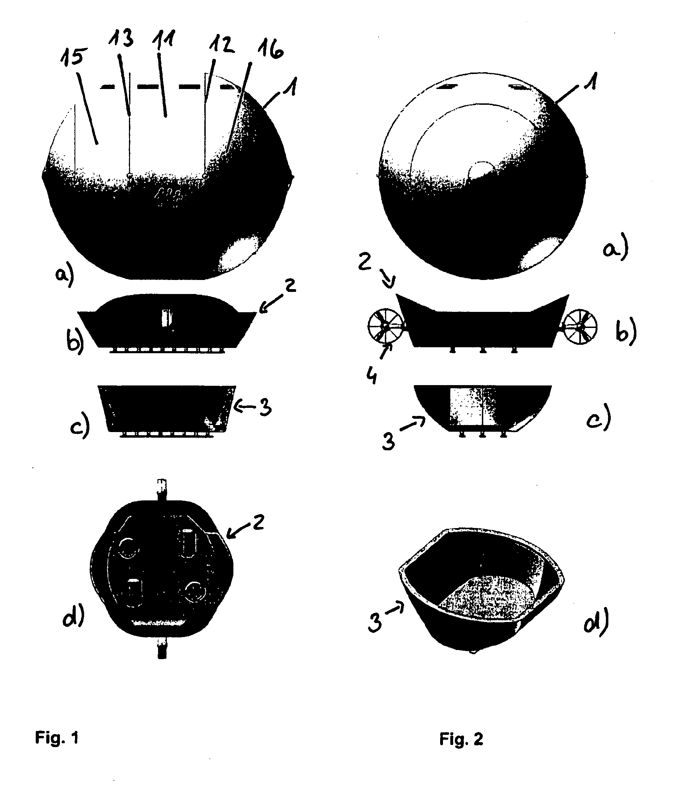

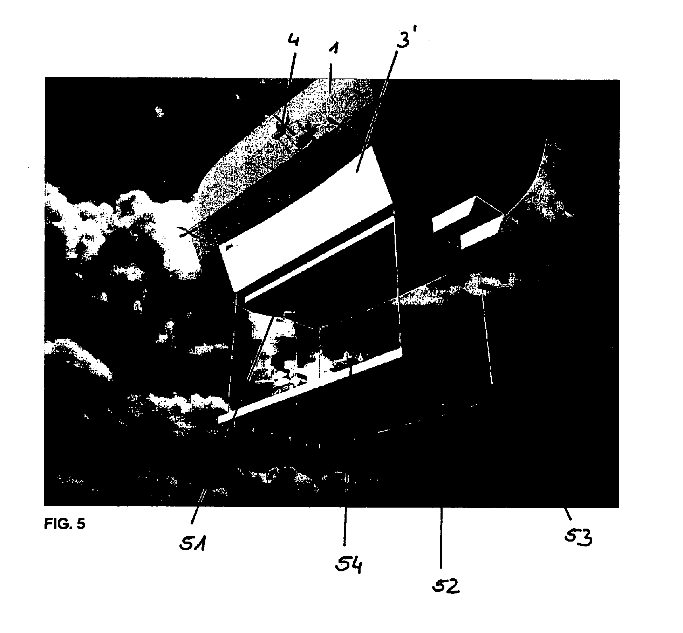

Das Konzept sieht eine Modulbauweise vor
1. Auftriebskörpermodul (Fig. 1 und 2)
2. Antriebs- und Ausrüstungsmodule (Fig. 1 und 2)
3. Transportmodul (Fig. 1-5)
4. Kranmodul (auch Fig. 5)
Die Module können mechanisch voneinander getrennt und mit gewissen Einschränkungen verschieden kombiniert werden. Daraus ergeben sich mehrere Einsatzmöglichkeiten für den Flugtransporter, welche im Folgenden in den grundsätzlichen Varianten vorgestellt werden.

### Beschreibung der Module und Systeme

### Auftriebskörpermodul der ersten Ausführungsform des Transporters

Der Auftriebskörper des Flugtransporters besteht aus mindestens drei in Reihe verbundener starrer Zellen (Sektionen in Tonnenform / Toroide und Halbkugelform), in die Gassäcke eingebracht werden können. Dabei sind das Bug- und das Heckteil als Halbkugeln mit einem Radius von ca. 20.6 m ausgelegt, während das zylindrische Mittelteil - oder eine vorbestimmbare Vielzahl dieser Tonnen - den gleichen Radius und eine Zylinderlänge von z.B. 14,3 m hat. Am Bug ist eine kegelförmige Spitze (Nase) von 2 m Länge vorgesehen. Damit beträgt die Länge des Auftriebkörpermoduls mindestens ca. 57,5 m. Der Durchmesser und die Zellenstruktur ist dem Zeppelin-Luftschiff der 30er Jahre LZ 129 "Hindenburg" entlehnt.

Die aus Stringern (horizontale Verbinder) und Spanten (ringförmige Steifen) montierte Tragkonstruktion für Bug und Heck, aber auch jeder Tonne, wird außen mit einer aerodynamischen Folie bespannt (eventuell zur Aufnahme von Werbeaufschriften). Innerhalb der Zellenstruktur werden mehrere Traggassäcke untergebracht. Die Traggassäcke werden so zugeschnitten, dass sie bei ihrem maximal möglichen Fülldruck die Zellen /Tonnen innen voll ausfüllen. Eine Befüllung mit Wasserstoff (H₂) wird angestrebt, es kann aber bis zu einer luftfahrttechnischen Zulassung zunächst auch mit Helium (He) begonnen werden.

Durch die Konstruktion mit innen liegenden Traggassäcken kann auf die aufwändige (Gewicht, Energie für Exauster, Kosten) Konstruktion mit Ballonets verzichtet werden. Der Zwischenraum zwischen den Taggassäcken und der Außenhaut / Folie, dem Zellenmantel, in dem sich die Gitterstruktur der Zellen und gegebenenfalls das Rohrsystem zur Befüllung der Gassäcke befinden, kann sowohl als Sicherheitszone durch Zwangsbelüftung zur Vermeidung von Knallgas bei Wasserstoffeinsatz, als auch zum zusätzlichen Auftrieb durch Erwärmung des Traggases mittels erhitzter Luft bei Einsatz von Helium genutzt werden.

Die toroiden Zellen sind modularer Teil der Haupttragkonstruktion. Sie werden miteinander formschlüssig gekoppelt und leiten über die so entstandene Fachwerkkonstruktion die von den Säcken herrührenden Auftriebs-Kräfte auf "Knotenpunkte", an denen ein Antriebsmodul und ein Krangeschimrodul oder Lastmodul angekoppelt sind. Dieses Tragwerk, ähnelt einer Fachwerkkonstruktion (Gitterstruktur); die Trennwände zwischen den Sektionen /Tonnen brauchen nicht geschlossen sein, da der Innenraum mit Gassäcken aus hochdichtem und hochfestem technischen Textil ausgefüllt wird.

Die Spanten, Stringer und Knoten werden aus Leichtbauwerkstoffen mit hoher spezifischer Tragfähigkeit wie Kohlefaserstrukturen oder neuartigen Werkstoffen wie Schaumaluminium mit glatter, fester Oberfläche, gefertigt. Sollte das Material nicht zur Verfügung stehen, kann auch auf die in der Luftfahrt bewährten Al- und Mg-Legierungen zurückgegriffen werden. Idealerweise hat der Werkstoff eine gute elektrische und thermische Leitfähigkeit, was die Betriebsweise des Transporters und seinen Blitzschutz erleichtern würde.

Die Verbindung der Elemente / Werkstoffe untereinander kann durch dem Fachmann geläufige Füge-Verfahren geschehen, auch z.B. durch Laserschweißtechnik, Nieten, Kleben etc.

Jede Tonne oder Toroid wird in seiner Breite von einer ringförmigen Spante begrenzt; von Spante zu Spante ist sie außen mit einer festen und sehr leichten Folie überzogen, die im Normalfall nur aerodynamische, thermische und Werbeträger-Funktion hat. Die Innenseite der Spanten-Stringer-Gitterstrukturen sollte zum mechanischen Schutz der Traggassäcke (Scheuem an der tragenden Struktur) eine Membrane erhalten.

Jeweils zwei Spanten bilden auf diese Weise einen Hauptspant (Hauptring) einer Tonne. Diese Spanten benachbarter Tonnen werden in geeigneter Weise z.B. nach dem Nut-Feder-Prinzip mit komplementärer Bauteilausbildung in zwei Achsen formschlüssig miteinander gekoppelt und in der dritten Achse (Schiffslängsachse) mechanisch fest miteinander verbunden (z.B. Verschraubung im Bereich der Knotenstruktur). So stellt jede Tonne ein Modul dar, die sich in vorbestimmbarer Anzahl entsprechend der gewünschten Tragfähigkeit des Transporters aneinanderreihen und so (gemeinsam mit Bug und Heck) das Auftriebsmodul bilden.

Innerhalb der Gitterstrukturen des Auftriebsmoduls - und auch der einzelnen Tonnen - sind Ringleitungen eingebracht. An diese sind die verschiedenen Traggassäcke angeschlossen, um die Befüllung oder die Entnahme des Gases zu gewährleisten. Sie haben entsprechende Saug- und Druckstutzen für das Zuführen und Abpumpen des Traggases (Druckausgleichssystem, Gewichtsausgleichssystem, Balancesystem).

Der so zusammengesetzte Auftriebskörper hat an der Vorderseite eine angesetzte flache Spitze zur Verbesserung der aerodynamischen Abströmung, zum Einleiten der Windlasten auf die Zellenhülle und zur Aufnahme der eventuell vorzusehenden Verankerungsmöglichkeit an einem Mast.

Im unteren Bereich der zylindrischen Tonnen - des Mittelteils des Transporters - kann die Zellen-Struktur kegelförmig oder pyramidenförmig mit der Spitze nach unten ausgestaltet sein, an deren Endpunkt die im Folgenden beschriebenen KielModule wie ein Krangeschinmodul angeschlagen werden können. Über diese "Adapterspitze" müssen die gesamten auftretenden Kräfte (Auftrieb des Moduls und Windlast) in die Gitterkonstruktion bzw. zu den Kielmodulen übertragen werden.

### Antriebs- und Ausrüstungsmodule

Das Auftriebskörpermodul müsste im "Äquatorbereich" (größe seitliche Ausdehnung und damit beste Manövrierpunkte) für das Absetzen einer Last oder zur Arretierung als Fesselballon beispielsweise 4 bis 6 Auf und Abwickeleinrichtungen (Winden) für Fang- und Abspannseile aufnehmen. Diese werden benötigt, um die Abspannung am Boden praktisch aufnehmen zu können, da es Personal nicht gelingt, während der Landung Abspannseile in über 30 m Höhe an dem Flugtransporter zu befestigen. Diese und weitere Aufgaben werden auf Kielmodule übertragen.

Je nach Zahl der Tonnen im Auftriebsmodul, können unter diesen Tonnen auch 2, 3 oder mehr Antriebsmodule sowie parallel und gleichzeitig auch Transport - und Kranmodule Verwendung finden.

Unter das Auftriebskörpermodul wird in einem Ausführungsbeispiel im Mittelteil ein Antriebsmodul starr, aber möglichst einfach demontierbar an die Zellenkonstruktion montiert. Dazu hat das Antriebsmodul eine zu den Spanten oder Knoten bzw. den Adapterspitzen komplementär ausgebildete Struktur, beispielsweise eine hydraulisch automatische einrastende Falle für ein Gegenstück am Antriebsmodul. Es kann aber auch je nach Anforderung und Automatisierungsgrad ein Modul mit dem anderen verschraubt werden.

Ein kielbildendes Antriebsmodul ist etwa
2-3 m hoch, an der Unterkante ca. 25 m breit und ca. 20 m lang. Die Seitenverkleidungen werden schräg an den Auftriebskörper angepasst, während vom und hinten die Verkleidung stromlinienförmig an die Zellenstruktur geführt wird. Der Boden wird als verstärkte Lasttraverse ausgebildet, an welcher ein Transportmodul befestigt werden kann.

Der so geschaffene Kielraum zwischen Außenverkleidung, der Zellenstruktur und dem Boden des Antriebmoduls hat aufzunehmen: die Triebwerke (oder Gasturbinen) innen in unmittelbarer Nähe der Ausleger mit den Luftschrauben, einschließlich der Luftein- und -ausläufe, ein Hilfsaggregat APU (Brennstoff H₂ oder Kerosin) mit passenden Generatoren für die projektierte Energiebereitstellung, die dazugehörenden Lufteinläufe und Ausläufe, die Energieverteilungen und Verkabelung, evtl. Klimageräte für die Heizung oder Abkühlung der Traggassäcke, H₂ -Flüssiggasbehälter oder Druckbehälter, Ballasttanks, Pumpen, Verdichter, Rohre und Leitungen, Seile und Trommeln mit Antrieb für Landung und Verankerung am Boden, Rechner und Steuerungstechnik, Messtechnik, Kommunikationstechnik, Beobachtungsanlagen, Feuerlöschanlagen, Roh- und Hiffsstoffe, Losteile sowie evtl. Wartungsgänge. Die Anlagen und Ausrüstungen benötigen die notwendigen Halterungen und Einbauräume. Dabei ist die gegenseitige Beeinflussung, die Sicherheit und Zugänglichkeit für Montage und Instandhaltung zu beachten.

Wesentliches Element im Innern des Antriebsmoduls ist der Platzbedarf für die hereinragende Spitze (Adapter) für die Krangeschirraufnahme. Das Antriebsmodul nimmt somit die gesamte Betriebsausrüstung auf und ummantelt die Aggregate, die immer am Auftriebskörpermodul verbleiten müssen. Die Abmaße richten sich nach den Anforderungen an den Platzbedarf, so dass hier der Fachmann korrigieren oder anpassen kann. Außerdem muss es die notwendigen Festigkeits- und Kraftübertragungsanforderungen erfüllen, denn an den Boden des Antriebsmoduls wird das eigentliche Transportmodul oder ein Kranmodul montiert werden. Dabei kann mit Sicherheit der sowieso sehr kraftaufnahmefähige Adapter für den Kranbetrieb in die Befestigung des Transportmoduls einbezogen werden, was Konstruktionsgewicht im Antriebsmodul spart.

Außen an das Modul werden Ausleger (Pylone) montiert, welche - die sinnvollerweise um 90 Grad schwenkbaren Luftschrauben aufnehmen.

### Transportbehältermodul

Unter das Antriebsmodul können verschiedene Spezialmodule, die für sehr unterschiedliche Einsatzfelder ausgerüstet sein können, montiert werden.

Der hier vorgestellte Lufttransporter ist primär als Lastentransporter und als Flugkran konzipiert. Für den Lastentransport ist ein Transportmodul vorgesehen, das ein möglichst großes Transportvolumen aufnehmen kann. Als Standardgröße wird eine Nutzlast von etwa 20 t bei großer Sperrigkeit des Ladegutes vorgesehen. Dabei wird die Oberkante des Moduls ist konstruktiv durch die Bodenkonfiguration des Antriebsmoduls weitestgehend vorgegeben.

Wie oben bereits ausgeführt, ist der Boden des Antriebsmoduls konstruktiv so auslegbar, dass er den Transportbehälter mechanisch automatisch und sicher aufnehmen kann. Die praktische Ausbildung eines Behälters (Form, Ausstattung) ist für sich aus dem Stand der Technik, beispielsweise von CargoLifter Behältern bekannt.

Der Transportbehälter muss außerdem die Ballasttanks aufnehmen, damit die Frachtgewichte entsprechend ausgeglichen und ausgetrimmt werden. Es wird davon ausgegangen, dass sehr leichte und feste Werkstoffe Verwendung finden.

### Krangeschirrmodul als Alternative zum Transportmodul

Für den Einsatz des Flugtransporters als Flugkran (Air Crane) im gefesselten Zustand wird ein Krangeschirr verwendet. Dieses Modul umfasst folgende Teile:
- Stahltrosse zwischen Kranadapter und Anschlagknoten der Abspanntrossen
- 3 oder 4 Abspanntrossen
- 3 oder 4 Winden, die die Abspanntrossen aufnehmen und bewegen
- Kranführerstand mit Bedieneinrichtungen für die Kranfunktionen, Windensteuerungen und Funksteuerungen für die im Kranbetrieb aufrecht zu haltenden Auftriebskörperfunktionen
- Kranwinde mit Kranseil, entsprechende Rollen und Lastanschlagmittel (z.B. Haken)

Durch Längenveränderungen der Abspannseile kann der Anschlagknoten für die zu kranende Last sowohl horizontal als auch vertikal in einem definierten Bereich in jede Stellung gefahren werden. Außerdem ist die Konzipierung der Abspannung genauer vorzunehmen, ob man mit 3 oder 4 Abspannseilen und Winden operiert, dies hängt im wesentlichen von der statistischen Erfassung der möglichen Einsatzszenarien ab. Einerseits kann bei 3-Seilenbetrieb das Geschirrgewicht und der Materialaufwand vielleicht etwas geringer gehalten werden, andererseits ist die Steuerung programmtechnisch komplizierter. Außerdem kann es günstiger sein, vier Abspanntrossen mit etwas geringerer Stärke zu handhaben.

Die gesamte Führung des Flugkranes erfolgt vom Boden. Eine Beobachterfunktion von Bord kann über entsprechende Kameratechnik mit Funkverbindungen ermöglicht werden. Ebenso muss die Kranwinde am Boden operieren, dann schmälert deren Gewicht nicht die Kranleistung, und die Energiezufuhr für den Windenantrieb ist relativ unproblematisch zu realisieren. Die Funktionsweise derartiger Kranmodule ist aus dem Stand der Technik für sich bekannt.

### Antriebssystem

Für den Antrieb werden am Markt bewährte und luftfahrttaugliche Propeller Turbinen-Triebwerke (PTL-TW) mit bewährtem Brennstoff Kerosin verwendet. Vom Drehzahlbereich her bieten sich dabei Hubschrauber-Triebwerk vorrangig an, da die Getriebe leichter und mit weniger Verlusten ausgelegt werden können.

Da die Pylone (Ausleger für die Aufnahme der Antriebe) mit den eingehausten Luftschrauben am Antriebsmodul ansetzen, sollten innerhalb dieses Moduls die Triebwerke in unmittelbarer Nähe eingebaut werden, um eine mechanische (über Getriebe und Kardanwelle) oder eine hydraulische Übertragung der Triebwerksleistung auf die Luftschrauben zu organisieren. Die Luftschrauben an den Auslegern sind schwenkbar auszuführen damit das Steigen und sinken des Transporters dynamisch unterstützt werden kann. Allerdings könnte es vorteilhafter sein, auf die Schwenkbarkeit der Luftschrauben zu verzichten und dafür ein weiteres Luftschraubenpaar für die Vertikalbewegungen vorzusehen.

Die Luftschrauben sollten an den Pylone drehbar gelagert werden, und zwar um einen Winkel von mehr als 90 Grad., da nicht nur Start- und Landung durch Senkrechtstellung der Luftschrauben und entsprechende Stellung der Blätter unterstützt werden kann, sondern auch der dynamische Sinkflug und die Höhenstabilisierung im Horizontalflug. Den Auftrieb allein über das Gasmanagement zu steuern, wäre zu langwierig.

Ein eigenständiges Hilfstriebwerk für Reserve- oder Ersatzenergieversorgung (APU), das evtl. auch für die Klimatisierung der Gaszellen und für die Aufwärmung des Mantels (Schnee- und Eisbeseitigung) genutzt werden kann, ist wie bereits beschrieben, vorgesehen. Es dient darüber hinaus auch zum Anlassen der Triebwerke und möglicherweise auch zum Aufheizen des Mantels bzw. der Tonnenmaterialien vor dem Start (Auftriebserhöhung). Die APU übernimmt die Bordstromversorgung in der Start- und Landephase, wenn die Marschtriebwerke abgeschaltet sind und ebenso am Boden oder im gefesselten Kranbetrieb, wenn keine andere Außenbordversorgung vorhanden ist. Infolge der skizzierten Bedeutung der APU und der notwendigen Redundanz ist mit großer Sicherheit auf zwei Aggregate zu orientieren.

### Betriebskonzept Frachttransport

### Parken am Boden und Beladen

Für den Lufttransporter ist konzipiert, ihn über Halteseile im vorderen Bereich des Antriebsmoduls am Boden zu halten. Durch eine entsprechende Ballastregelung kann er mehrere Meter über der Erde in der Schwebe gehalten werden. Gefederte, für das Parken angebaute Stützkufen oder Stützräder dienen als Aufschlagschutz am Boden. Der Schwebezustand wird automatisch durch Regelung des Ballastwassers gehalten, d.h. Gasverlust wird beispielsweise mit Wasserablassen kompensiert. Damit kann sich der Transporter selbsttätig in die Stellung des geringsten Windwiderstandes drehen.

Für operatives Parken sowie Arbeiten am Boden werden vier Halteseile von entsprechenden Aufwickeleinrichtungen - möglichst von unterhalb des Äquators des Auftriebkörpermoduls - heruntergelassen. Diese werden auf mobile Winden oder Fahrzeuge gekoppelt, die den Lufttransporter fest auf den Boden ziehen und verankern. Die Haltekräfte betragen entsprechend der Ballastbeladung nur wenige 100 kg. Damit lässt sich der Boden des Transportbehältermoduls (Container für die Lastaufnahme) direkt auf dem Erdboden aufsetzen.

Dieser Art Verzurrung wird auch für Starkwindsituationen in Betracht gezogen, wobei hier in praktikablen Höhen am Transporter (etwa am Antriebsmodul) weitere Haltetrossen vorgesehen werden müssen.

Soll der Flugtransporter beladen werden, werden die Tore oder Ladeluken des Transportmoduls geöffnet, womit dieser mit der Last direkt befahrbar wird. Die Lasten können einerseits am Boden des Containers abgestellt und gesichert werden, andererseits am Boden des darüber liegenden Antriebsmoduls oder am Kranadapter eine zusätzliche Befestigungsabsicherung erhalten. Darauf wird das auf den Leerzustand angepasste Ballastwasser bis auf die für den Start erforderliche Menge abgelassen, d.h. das Zuladegewicht wird durch Ballastreduzierung 1 : 1 ausgeglichen.

### Starten - Beispiel

Der Start erfolgt durch Vergrößerung des Auftriebs des Flugtransporters. Der Auftrieb wird durch folgende Maßnahmen erzeugt:
- Auffüllen der Traggassäcke bis zu dem Auftrieb, der zum Schwebezustand unter Einrechnung des dynamischen Auftriebs in 500 bis 600 m Höhe genügt.
- Erwärmen des Traggases (gasdynamische Aufthebserhöhung) durch Einleitung von Heißluft (abgeleitet von einer Verdichterstufe der TW oder der APU) in den Mantel (Zwischenraum zwischen der inneren Membrane und der Außenhaut) des Auftriebkörpermoduls. Durch starke Sonneneinstrahlung kann sich der Mantel auch schon selbsttätig aufheizen, wobei eventuell nur an Sonnenabgewandter Seite Heißluft einzuleiten wäre. Die eingeleitete Heißluft in den Mantel des Auftriebsmoduls trägt außerdem zur Auftriebserhöhung wie bei einem Heißluftballon bei.
- Unterstützung des Auftriebes durch Vertikalstellung der Luftschrauben oder spezielle vertikale Antriebe.
- Sofern noch Ballastwasser in den Tanks ist, kann dieses bis zum notwendigen Auftriebsgewinn verringert werden (eventuell ist sogar überhaupt die maximale Frachtaufnahme um diese Reserve zu begrenzen).

Bei Erreichen der notwendigen Auftriebskraft werden die Halteseile am Boden ausgeklinkt und am Antriebsmodul aufgewickelt, und der Transporter schwebt auf seine Reisehöhe.

Für den Startvorgang wird möglichst vom Zustand leichter als Luft" ausgegangen, wodurch das Fahrzeug alleine am Fangseil in die Höhe schwebt bis die Triebwerke zugeschaltet werden können, ohne Gefahr zu laufen, dass Staub und Partikel aufgewirbelt werden, die zu Schädigungen führen können.

Mit dem Abheben wird der Heizvorgang zur Auftriebserhöhung eingestellt, und bei Erreichen der erforderlichen Mindesthöhe wird der Antrieb in Horizontalrichtung gestellt oder zugeschaltet. Die Ballastwasserproduktion an Bord muss jetzt den Auftrieb wieder reduzieren und den Kraftstoffverbrauch ausgleichen. Evtl. muss zur Unterstützung auch etwas Traggas abgelassen werden, wenn es nicht als Brennstoff sowieso aus den Traggassäcken entnommen werden kann.

### Landen und Last entladen

Hat der Flugtransporter sein Absetzziel erreicht, beginnt er mit der genauen Positionierung und dem Ablassen des Fangseiles, welches zuerst einen Potentialabgleich auf Erdniveau erzeugt und anschließend mit einer Winde am Boden verbunden wird. Diese zieht dann den Flugtransporter herunter, bis die seitlichen Befestigungsseile mit den entsprechenden Bodenwinden verbunden werden können. Wichtig ist, dass dies mit abgeschalteten Triebwerken geschieht, damit keine Teile in die Luft gewirbelt werden oder Menschen zu Schaden kommen können.

Gelangt der Flugtransporter auf diese Weise in Bodennähe, erfolgt das Abwickeln der vier Halteseile vom Auftriebskörpermodul. Die Halteseile werden an geeignete Zugmaschinen gekoppelt, und der Transporter wird zur genauen Absetzstelle positioniert sowie fest auf dem Erdboden gezogen. Für diese Verankerung können sowohl mobile (auf Fahrzeugen montierte) oder stationäre Seilwinden als auch notfalls nur Fahrzeuge (Breitziehen der Halteseile) zum Einsatz kommen.
Die Tore oder Laderampen am Transportbehälter können geöffnet und die Fracht getauscht werden. Ist keine Rückfracht vorhanden, muss Ballastwasser getankt werden. Steht auch kein Wasser zur Verfügung, kann Sand bzw. anderes geeignetes Material in den Container gefüllt werden.

### Betriebskonzept Flugkran

### Anflug und Arbeitsvorbereitung

Der als Flugkran vorgesehene Transporter fährt selbsttätig zum Einsatzort und leitet den Landevorgang ein. Dazu lässt er aus dem Antriebsmodul das Fangseil herunter. An dem Fangseil wird der Transporter in Bodennähe gezogen. Darauf erfolgt das Abwickeln der Halteseile vom Auftriebskörpermodul, die am Boden auf Winden oder an schwere KFZ gekoppelt werden. Damit wird der Transporter fest auf den Boden gezogen, möglichst gleich an die Stelle, an der Antriebs- und Transportmodul abgestellt werden können.

Das Antriebsmodul wird vom Auftriebkörpermodul getrennt. Darauf werden die Halteseile etwas nachgegeben, damit das Auftriebkörpermodul von seinen Kielmodulen abheben sowie etwas zur Seite gefahren werden kann. Jetzt kann das Krangeschirr, das evtl. sogar im Transportmodul mitgebracht wurde, an den Kranadapter des Auftriebkörpers angeschlagen werden. Am Anschlagknoten wird das Kranseil über eine Rolle oder Rollensystem (Flaschenzug) angeschlagen und zur bodenseitigen Kranwinde geführt. Die Abspanntrossen des Krangeschirrs mit den Arbeitswinden etwas außerhalb des Bearbeftungsplatzes übernehmen nun die Fesselung des Auftriebkörpers. Die Halteseile und das Fangseil werden frei und wieder aufgewickelt.
Anstelle eines mitgeführten Krangeschirrs kann auch ein separates Kranmodul Verwendung finden, das wie das Transportmodul oder das Antriebsmodul an den Auftriebskörper angekoppelt werden kann.

Der Flugkran ist damit einsatzbereit.

### Arbeitsweise des Flugkranes

Nach der vollzogenen Vorbereitung des Flugkranes wird der Auftriebskörper durch Nachgeben der Abspanntrossen auf die Arbeitshöhe über dem Bearbeitungsplatz gebracht.
Der Auftriebskörper kann sich mittels dieser einachsigen Aufhängung aerodynamisch in den Wind drehen und je nach Wandstärke auch aus dem Lot vom Anschlagknoten bewegen, der wiederum durch diese Art der Aufhängung weitgehend in Ruhe verbleibt.

Durch entsprechend programmiertes Einziehen und Ausfahren der Abspanntrossen kann der Flugkran in einem definierten Arbeitsbereich verfahren werden, dabei Lasten aufnehmen, horizontal umsetzen und wieder absetzen.

Da der Auftriebskörper mittels der Abspanntrossen auch vertikal verfahrbar ist, können die Versuche und Experimente ergeben, dass man die Kranwinde und die Kranseilrollen evtl. einsparen kann. Das am Anschlagknoten angebrachte und abgehängte Anschlagmittel wird durch koordiniertes Anziehen der Abspanntrossen nach unten gefahren, die Last wird angeschlagen und durch koordiniertes Vieren der Abspanntrossen hebt der Auftriebskörper die Last an.

Während die Winden, die die Abspanntrossen führen, auf Fundamenten oder auf schweren Fahrzeugen einen festen Untergrund benötigen, braucht der Arbeitsbereich nicht befestigt sein, d.h. der Flugkran ist besonders für Baustellen geeignet, auf denen man nicht oder nur erschwert mit schwerer Technik arbeiten kann. Die vier Winden müssen die Auftriebskraft der Auftriebskörpers, zuzüglich der maximalen Windlast, abzgl. des Eigengewichtes und des Krangeschirrgewichtes aufnehmen. Die Winden, auch die Kranwinde, bedürfen einer ausreichenden Erdung für den Potentialausgleich und zur Ableitung von Entladungsschlägen.

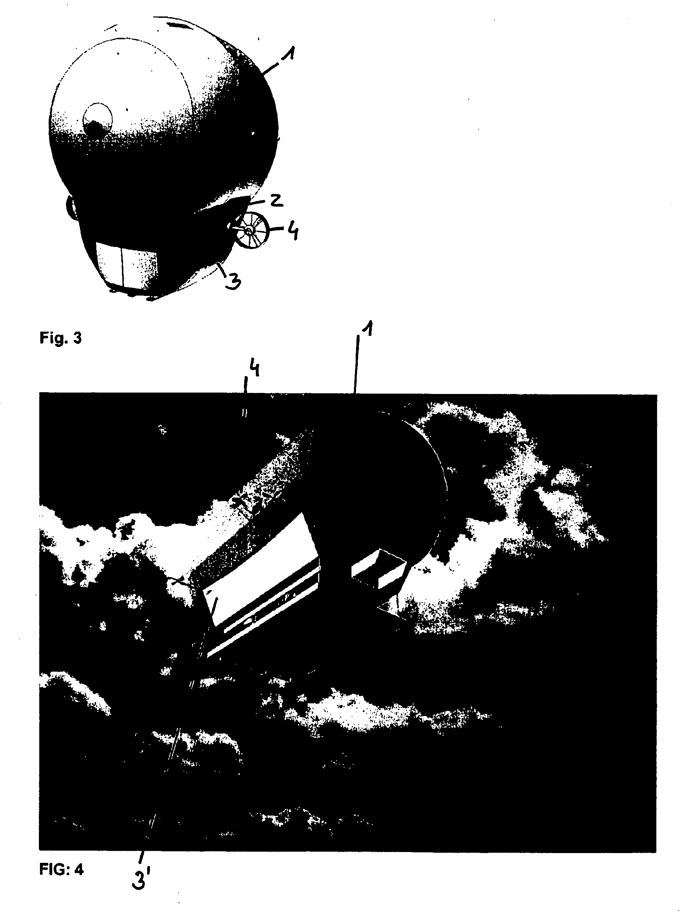

Fig 1 und 2 zeigen den Flugtransporter in Seiten- und Vorderansicht, getrennt in Module 1-3. Fig. 3 zeigt den Fugtransporter, das Auftriebsmodul 1 gekoppelt mit Antriebsmodul 2 und Lastmodul 3
Fig. 1a zeigt die einfachste Variante des Flugtransporters mit Auftriebsmodul 1 mit einer Tonne 11 als Modul gekoppelt an den vorderen Spanten 13 und den hinteren Spanten 12 mit Bug 15 bzw. Heck 16. Die Tonne 11 ist von einem textilen Belag 14 zwischen den Spanten 12, 13 überzogen.
Fig. 1b zeigt das Antriebsmodul 2, Fig. 1c das Last- oder Transportmodul 3 in Seitenansicht in Fig. 1d in Draufsicht.
Fig. 2a bis 2d zeigen den Transporter analog Fig 1 in Vorderansicht.
Die Figuren 4 und 5 zeigen einen alternative Ausführungsform des Transporters gegenüber der gemäß den Fig. 1 - 3 mit mehreren ringförmigen Zylinderteilen; einen Transporter mit entsprechend höherem Auftrieb und höherer Beladbarkeit. Die Antriebe 4 können dabei am Auftriebskörper 1 mittels Pylonen befestigt sein und das an den Auftriebskörper als Kiel angeflanschte Transportmodul 3'verfügt über eine von der Modulbasis 51 an Seilen 53 absenkbare Plattform 52 für Container oder, wie dargestellt, für Lastfahrzeuge 54.
Beim Lande - und Belade- und Entladeverfahren wird ein ausgeklügeltes Ballastmanagement und Traggasmanagement angewendet um einen angepassten Auftrieb des Transporters zu erhalten.

## Patentansprüche

1. Flugtransporter mit starren Zellenstrukturen (1), die mit leichten Materialien als Hülle (14) bespannt sind, zusammengesetzt aus Modulen, umfassend zwei etwa halbkugelförmige Elemente (15,16) für Bug und Heck, mindestens einen ringförmigen Abschnitt (11) als modulares Element, wobei die Elemente an ihren Rändern nach dem Nut-Feder-Prinzip in zwei Achsen formschlüssig und in der dritten Achse durch geeignete Fügemittel zu einem Auftriebsmodul verriegelbar sind, sowie ein Transport- oder Kranmodul (3, 3'), angeordnet als starrer Kiel des Lufttransporters unter dem Auftriebsmodul.

2. Flugtransporter nach Anspruch 1, **dadurch gekennzeichnet, dass** die Antriebe (4) in einem Antriebsmodul (2) als Kielmodul zusammengefasst sind.

3. Flugtransporter nach Anspruch 1, **dadurch gekennzeichnet, dass** der ringförmigen Abschnitt (11) etwa als Toroid ausgebildet ist, wobei mindestens zwei durch Stringer beabstandete Spanten stabile Ringe bilden, deren Ränder komplementär für den Formschluss mit benachbarten Spanten ausgebildet sind.

4. Flugtransporter nach Anspruch 1 oder 2, **dadurch gekennzeichnet, dass** die Halbkugel- oder/ und Zentralelemente (1, 15, 16) mit Gassäcken oder Ballonets füllbar sind, deren Volumen variabel ausbildbar ist.

5. Flugtransporter nach einem der vorhergehenden Ansprüche, **dadurch gekennzeichnet, dass** die Antriebe (4) und deren Zufuhreinrichtungen für Kraftstoff so gestaltet sind, dass Wasserstoff zugleich als Traggas und als Treibstoff verwendbar ist.

6. Flugtransporter nach einem der vorhergehenden Ansprüche, **dadurch gekennzeichnet, dass** die Zellstrukturen (1) mindestens teils aus Leichtbauwerkstoffen bestehen.

7. Flugtransporter nach einem der vorhergehenden Ansprüche, **dadurch gekennzeichnet, dass** er unbemannt ist und Lande-, Start- und Belade- sowie Entladezyklus mindestens teilweise fernsteuerbar ist.

8. Verfahren zum Starten oder Landen eines Flugtransporters nach einem der vorhergehenden Ansprüche, **dadurch gekennzeichnet, dass** sein Auftrieb durch Erwärmung oder Kühlen von mindestens Teilen des Auftriebsmoduls (1) und / oder der Gase am und im Auftriebsmodul steuerbar ist.

9. Verwendung eines Flugtransporters nach einem der Ansprüche 1 - 7 als temporär stationärer Kran durch Abkoppeln des Lastmoduls oder Transportmoduls und Fesseln des Transporters mittels bordeigener Winden an festen Anschlagpunkten am Boden.

## Claims

1. Aerial transporter having rigid cell structures (1) which are covered with light materials as a skin (14), composed of modules, comprising two approximately hemispherical elements (15, 16) for bow and stem, at least one annular section (11) as modular element, and a transport or crane module (3, 3') arranged as a rigid keel of the aerial transporter under the lifting module, wherein the elements can be locked to a lifting module at their edges in accordance with the tongue-and-groove principle with positive locking in two axes and by appropriate joining means in the third axis.

2. Aerial transporter according to claim 1, **characterised in that** the drives (4) are combined in a drive module (2) as a keel module.

3. Aerial transporter according to claim 1, **characterised in that** the annular section (11) is formed approximately as a toroid, wherein at least two frames spaced apart by stringers form stable rings, the edges of which are formed in a complementary manner to establish positive locking with adjacent frames.

4. Aerial transporter according to claim 1 or 2, **characterised in that** the hemispherical or/and central elements (1, 15, 16) can be filled with gas bags or ballonets the volume of which can be designed to vary.

5. Aerial transporter according to one of the preceding claims, **characterised in that** the drives (4) and their feed devices for fuel are designed such that hydrogen can be used both as lifting gas and as fuel.

6. Aerial transporter according to one of the preceding claims, **characterised in that** the cell structures (1) are made at least partially from lightweight materials.

7. Aerial transporter according to one of the preceding claims, **characterised in that** it is unmanned and that the cycle of landing, starting, loading and unloading can be at least partially remote-controlled.

8. Method of starting or landing an aerial transporter according to one of the preceding claims, **characterised in that** its lift can be controlled by heating or cooling of at least parts of the lifting module (1) and/or the gases at and in the lifting module.

9. Use of an aerial transporter according to one of claims 1-7 as a temporarily stationary crane by decoupling the load module or the transport module and by tying the transporter to fixed anchor points on the ground by means of on-board winches.

## Revendications

1. Moyen de transport volant ayant des structures (1) de cellule rigides couvertes de matériaux légers comme enveloppe (14), composé de modules, comprenant deux éléments (15, 16) approximativement hémisphériques pour la nez et la queue, au moins une section (11) annulaire comme élément modulaire, et un module (3, 3') de transport ou de grue disposé sous le module de portance en tant que quille rigide du moyen de transport volant, les éléments pouvant être verrouillés vers un module de portance à leurs bords par liaison de forme dans deux axes, et par des moyens d'assemblage appropriés dans leur troisième axe, selon le principe d'assemblage à rainure et languette.

2. Moyen de transport volant selon la revendication 1, **caractérisé en ce que** les entraînements (4) sont regroupés dans un module (2) d'entraînement en tant que module de quille.

3. Moyen de transport volant selon la revendication 1, **caractérisé en ce que** la section (11) annulaire est formée approximativement en tant que tore, au moins deux couples espacés par des serres formant des anneaux stables dont les bords sont formés de manière complémentaire pour établir une liaison de forme avec des couples adjacents.

4. Moyen de transport volant selon la revendication 1 ou 2, **caractérisé en ce que** les éléments (1, 15, 16) hémisphériques ou/et centrales peuvent être remplis de sacs à gaz ou de ballonnets au volume qui peut être réalisé de façon variable.

5. Moyen de transport volant selon l'une des revendications précédentes, **caractérisé en ce que** les entraînements (4) et leurs dispositifs d'alimentation pour carburant sont réalisés de telle manière que de l'hydrogène peut être utilisé aussi bien comme gaz porteur que comme carburant.

6. Moyen de transport volant selon l'une des revendications précédentes, **caractérisé en ce que** les structures (1) de cellules sont faites au moins partiellement de matériaux de construction légers.

7. Moyen de transport volant selon l'une des revendications précédentes, **caractérisé en ce qu'**il est sans équipage, et que le cycle d'atterrissage, de départ, de chargement, et de déchargement peut être au moins partiellement téléguidé.

8. Procédé de départ ou d'atterrissage d'un moyen de transport volant selon l'une des revendications précédentes, **caractérise en ce que** sa portance peut être commandée par le chauffage ou le refroidissement d'au moins des parties du module (1) de portance et/ou des gaz au, ou dans le, module de portance.

9. Utilisation d'un moyen de transport volant selon l'une des revendications 1 à 7 comme grue temporairement fixe en découplant le module de chargement ou le module de transport, et en attachant le moyen de transport à des points d'ancrage fixes sur le sol, par des treuils embarqués.
